# EUROPEAN PATENT APPLICATION

(11) **EP 1 463 245 A2**
(43) Date of publication of application: **29.09.2004**
(21) Application number: 04300140.3
(22) Date of filing: 12.03.2004
(51) Int. Cl.: H04L 12/46, H04L 12/413, H04L 12/24

(54) **Ethernet path verification**

(30) Priority: 14.03.2003 CA 2422258
(71) Applicant: ALCATEL, 75008 Paris (FR)
(72) Inventor: Cheng-Yin, Lee, Ottawa Ontario K2B 6A5 (CA)
(74) Representative: Feray, Valérie

(57) **Abstract**

The present invention provides an OAM tool that enables a network operator to verify the path that an Ethernet frame traverses through bridges in a bridged Ethernet LAN. Verification is performed using a mechanism to ping the path a frame will traverse. An Ethernet path verification message (Eping message) is sent in the data path, the message having a new EtherType that identifies it as a path verification message. The method verifies the data path that frames actually take, rather than determining the data path that frames should take as is done by prior art methods that utilize the control plane for path determination.

## Description

### FIELD OF THE INVENTION

This invention relates to communications networks and more particularly to systems for, and methods of, verifying data path integrity in an Ethernet bridged LAN.

### BACKGROUND

The Ethernet system was originally developed to provide communications between a limited number of stations in a local area network (LAN) environment. Concomitant with recent improvements in transmission medium technology and related infrastructure came improvements in the speed at which Ethernet frames can be transported. The distances over which Ethernet frames can be carried has also increased with the improvements in system architecture.

Generally the Ethernet system consists of three basic elements: the physical medium to carry Ethernet signals between customer nodes via intermediate switches and bridges; a set of medium access control (MAC) rules embedded in each Ethernet interface; and an Ethernet frame that consists of a set of bits used to carry data, including control info rmation, over the system.

Typically, each Ethernet interface, such as a bridge or switch, maintains a management information base (MIB) which stores relevant information regarding each bridge and the identity of other bridges in the system which it can ac cess.

Verification of the integrity of a data path and associated forwarding elements in an Ethernet network can be an important management function. It is known to test the connectivity of IP paths through routers using what is known as an IP ping. "Ping" is a useful network debugging tool which takes its name from a submarine sonar search wherein a short sound burst is sent out and the network listens for a echo or a ping coming back. In an IP network the ping function sends a short data burst, i.e. a single packet, and listens for a single packet in reply. Although the ping mechanism has been used in IP technology, Applicants believe that it has not previously been employed to test a bridged Ethernet LAN.

The mechanism is basically an OAM (operation s, administration and management) tool which allows a network operator to do a path verification to different destinations in a bridged LAN using a MAC address of the destination. This is comparable in many ways to the aforementioned IP ping that tests th e connectivity of a path a packet traverses through a router. In the present application, however, an Ethernet ping tests the actual path a frame traverses through bridges in a subnet/LAN.

Some known methods test the connectivity in a bridged LAN through the control plane of bridges instead of the actual path a frame traverses. In this known technique the path that a frame should traverse in a bridged LAN is ascertained by querying the MIB of the bridges. The downside of this method, however, is that there may be discrepancies between information in the MIB and the actual path a frame traverses. These discrepancies can arise because the MIB, control plane or data path tables are not in agreement for various reasons and this could actually be the cause of the problem that is being investigated.

One prior art proposal is to perform an Ethernet verification in a similar manner to an IP traceroute. In this method frames are repeatedly sent along the route and each successor frame gets one hop closer to the destination before a bridge at that current hop responds to the sender of the frame. This method is accomplished by sending multicast frames that include time to live (TTL) variables that get decremented at each hop. When a bridge receives a frame it de crements the TTL variable and if the variable has expired the bridge responds to the sender. However, the problem with this approach is that the control plane, which is software driven at each hop, must process the frame since it is not feasible to upgrade all hardware or network processors or bridges in a network to perform this function. This adds unnecessary delay and therefore any roundtrip measurements would be inaccurate. Furthermore, any discrepancies between the control plane tables and the data path forwarding tables would cause the resulting route trace to be different than the actual route that a frame would take along the path i.e. the resulting route trace would be incorrect.

Other existing proposals require hardware or network processor cha nges in intermediate bridges to do a route verification. While it may be feasible to update edge network elements it is less desirable, or indeed not feasible, to implement upgrades in core or intermediate bridges.

It is therefore an object of the presen t invention to find a way to do an Ethernet ping (Eping) of a frame through the data path without making hardware changes to the bridges in the network.

To perform the verification technique of the present invention an operator would initiate an Ethernet ping from a provider edge (PE) device directed to a particular MAC address. The Eping tests the integrity of the path to the destination and can also calculate the roundtrip delay between source and destination. If the source address is not specified the default setting for the source address is the MAC source address of the device where the Eping is invoked.

It should be noted that the invention not only checks or verifies the path but also verifies the frame forwarding functional elements in the path , e.g. the bridges.

### SUMMARY OF THE INVENTION

Therefore in accordance with a first aspect of the present invention there is provided a method of verifying a data path from a source node to a destination node in a bridged Ethernet network, the data path incl uding a source edge node connected to the source node and a destination edge node connected to the destination node, comprising the steps of: a) creating, at the source edge node, a path verification request message; b) encapsulating, by the source edge no de, the request message in a first Ethernet frame including a path verification request indication; c) sending the first Ethernet frame towards the destination node along the data path; d) detecting, at the destination edge node, the first Ethernet frame; e) creating, at the destination edge node, a path verification response message; f) encapsulating, by the destination edge node, the response message in a second Ethernet frame including a path verification response indication; g) sending the second Ethernet frame towards the source node along the data path; h) detecting, at the source edge node, the second Ethernet frame; and i) determining, by the source edge node responsive to receiving the response message, that the data path is operational.

According to a second aspect of the invention there is provided a system for verifying a data path from a source node to a destination node in a bridged Ethernet network, the data path including a source edge node connected to the source node and a destination edge node connected to the destination node, comprising: means, at the source edge node, for creating a path verification request message; means, at the source edge node, for encapsulating the request message in a first Ethernet frame including a path verificat ion request indication; means for sending the first Ethernet frame towards the destination node along the data path; means, at the destination edge node, for detecting the first Ethernet frame; means, at the destination edge node, for creating a path verif ication response message; means at the destination edge node for encapsulating the response message in a second Ethernet frame including a path verification response indication; means for sending the second Ethernet frame towards the source node along the data path; means, at the source edge node, for detecting the second Ethernet frame; and means, at the source edge node responsive to receiving the response message, for determining that the data path is operational.

According to a further aspect of the in vention there is provided a method of tracing a data path route from a source node to a destination node through multiple intermediate nodes in a bridged Ethernet system comprising: sending a succession of Ethernet encapsulated route query messages from th e source node, each message containing a media access control (MAC) address of the destination node; receiving, at route trace enabled bridges in the system, the encapsulated route query messages; determining at a control plane of the route trace enabled b ridges a MAC address of a next hop bridge on route to the destination node; returning the MAC address of the next hop bridge to source node in a response message; repeating the sequence through remaining intermediate bridges until a response message indica ting that the destination node has been identified; and tabulating information in the response messages.

According to a still further aspect of the invention there is provided a system for tracing a data path route from a source node to a destination node through multiple intermediate nodes in a bridged Ethernet system comprising: means for sending a succession of Ethernet encapsulated route query messages from the source node, each message containing a media access control (MAC) address of the destination node; a control plane at route trace enabled bridges in the system to receive the encapsulated route query messages; means at a control plane of the route trace enabled bridges for determining a MAC address of a next hop bridge on route to the destination node; returning the MAC address of the next hop bridge to source node in a response message; means for repeating the sequence through remaining intermediate bridges until a response message indicating that the destination node has been identified; and mea ns for tabulating information in the response messages.

### BRIEF DESCRIPTION OF THE DRAWINGS

The invention will now be described in greater detail with reference to the attached drawings wherein:
Figure 1 is a high level block diagram of the architecture of the present invention;
Figure 2 illustrates by way of a high level block diagram the architecture of a second embodiment of the present invention;
Figure 3 illustrates an Ethernet Frame format;
Figure 4 illustrates a first trace route query message;
Figure 5 illustrates a trace route response message;
Figure 6 illustrates a second trace route query message; and
Figure 7 is a flow diagram showing the process steps of the second embodiment.

### DETAILED DESCRIPTION OF THE INVENTION

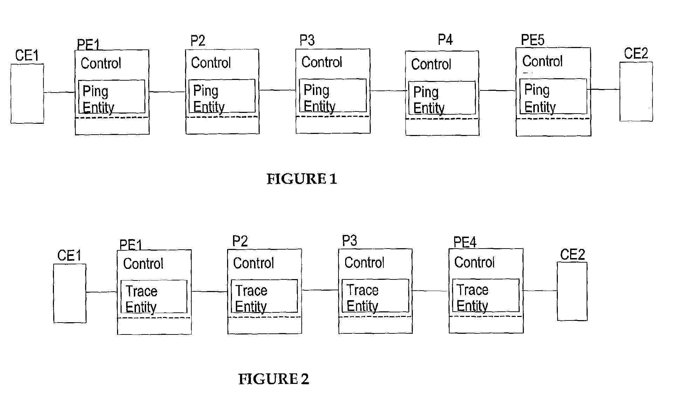

The present invention, as illustrated generally in the high level diagram of Figure 1, relates to a method of conducting path verification in a bridged LAN network. According to the invention an Ethernet path verification message (Eping message) is sent in the data path wherei n the message has a new EtherType designation which identifies the message as a path verification message. This approach has the advantage of verifying the data path that frames actually take rather than determining the data path that frames should take a s is done by the prior art methods that utilize the control plane for path determination.

As shown in Figure 1, and set out herein below, CE1 and CE2 represent customer edge (CE) devices at opposite ends of a bridged Ethernet LAN.
CE1 - - - PE1 - - - P2 - - - P3 - - - P4 - - - PE5 - - - CE2

Provider edge devices PE1 and PE5 are the devices at the edges of the network which communicate directly with the respective customer edge devices. In this example a provider wants to test the integrity of a data p ath from CE1 to CE2 of a virtual LAN (VLAN). For convenience the virtual LAN will have a tag value of 1000. The operator initiates an Eping from a provider edge i.e. PE1 device to a MAC address that would be the address of customer edge device CE2. This would be defined as Eping CE2_DA CE1_SA. The verification message should test every bridge on the path between the source and destination and will determine the round trip delay of a frame traversing the VLAN.

In general the Eping message will be sent f rom an edge device (PE1) which represents the source or the next hop of CE1. The simplest way of implementing an Eping is to send, by an EtherType, an Eping request message for a destination MAC address, for example CE2, by encapsulating the Eping request message in an Ethernet frame with the source address set to the MAC address of CE1 and the destination source address set to the MAC address of CE2. The basic Ethertype is set to VLAN and a sub EtherType is set to Ping_Request. In this example provider edge device PE5 filters the sub EtherType Ping Request at egress. The Eping request message also contains the time stamp when the message is sent out from PE1.

In general existing Ethernet switches or bridges can easily filter a frame at the ingress of a switch but may not be able to filter a ping frame at the egress of a switch. Thus the Ethernet ping request message is filtered at the ingress of PE5. A ping response message is then sent back to PE1. This response message is encapsulated in an Ethernet frame with the source address set to CE2 and a destination address set to CE1. The Eping response message contains the time stamp field copied from the Eping request message. PE1 will then filter the Ethernet ping response and send the ping response to the control plane. The ping software entity in the control plane computes the time that has elapsed using the time stamp field in the Eping response message.

To accommodate edge devices that cannot divert a frame from the EtherType Ping_Request/Respon se message to the control plane at either the ingress or egress of the switch a mechanism to discover the egress provider edge for an Ethernet frame is required. This is performed using a discover request and a discover response message encapsulated in th e request message. Thus, at PE1 an Eping discover request message for a destination MAC address, i.e. CE2, is sent to the next bridge hop (PE2) by looking up the MAC forwarding table to the destination.

To accommodate PE switches that cannot divert a fra me with the EtherType Ping_Request/Response to the control plane, at either the ingress or egress of the switch, the following mechanism to discover the egress PE for an Ethernet frame is provided.

At a PE (PE1), an Eping discover request message for a d estination MAC address (e.g. CE2) is sent to the next bridge hop (P2) by looking up the MAC forwarding table to the destination.

The Eping discover request message is encapsulated in an Ethernet frame with the SA set to MAC address of CE1 and the DA set to the MAC Address of P2, the EtherType is set to VLAN and the VLAN tag value is set to 1000. The sub EtherType (EtherType of the frame belonging to VLAN 1000) is set to EtherType Discover_Request. The Eping discover request message contains the following field:
- the DA, i.e. MAC address of CE2

When P2 receives the Eping discover request message which is destined to it, it terminates the frame and sends the frame to the control plane (or higher layer entity) handling the EtherType Discover_Request.

The control plane EPing entity then looks up the next Bridge hop to CE2 (the address is in the Eping message). The control plane EPing entity in P2 sends an EPing discover request message to P2 with the following field:
- the next Bridge hop to CE2, i.e. P3.

The Eping discover request message is encapsulated in an Ethernet frame with the SA set to P2 and the DA set to the MAC address of P3, the EtherType is set to EtherType_Discover_Request.

When P3 receives the Eping discover request message, it terminate s the message destined to it and sends the message to the control plane handling the EtherType_Discover_Request. At P3, another EPing discover request message is sent to the next bridge hop P4, and the procedure above is repeated at each bridge hop, until the EPing discover request message is received at PE5 and there is no next bridge hop or the next bridge hop is equal to the EPing discover request message field, CE2 (if the provider bridges processes BPDU from CE2 and is aware of the customer bridges). A t this point the egress PE (PE5) is discovered.
CE1 ----- PE1 ----- P2 ----- P3 ----- P4 ------ PE5 ----- CE2
1^{st} Discover
Request msg
-------->
2nd Discover
Request msg
----->
----->
Last Discover
Request msg
----->

When a PE (PE5) receives an EPing discover request message and the n ext bridge hop, is equal to the EPing request message field CE2 or there are no next bridge hop, the EPing entity shall send an EPing discover response message back to PE1. The EPing response message is encapsulated in an Ethernet frame, the SA is set to CE2, the DA is set to PE1, EtherType_Discover_Response message.

When PE1 Eping entity receives the EPing discover response message from PE5, Eping sends a EPing request message back to PE5 directly, with EtherType VLAN and sub EtherType Ping_Request. The E Ping entity in PE5 sends a EPing response message back to PE1 directly, with EtherType VLAN and sub EtherType Ping_Response. When PE1 receives the EPing response message, it displays the rtt delay as follows:
Eping from PE1 to PE5 for test packet from C E1 to CE2:
Rtt: 40msec

All bridges should be configured to punt unknown/new EtherType such as EtherType Ping to the control plane, to allow intermediate bridges to intercepting EtherType_Ping messages to discover the egress PE.

If the SA is not specified, the Ethernet header SA is set to the PE's MAC SA.

The reason for specifying the SA is for cases where both the SA and DA of a frame are hashed by an underlying tunneling switching implementation e.g. MPLS/IP to use different Equal Cost Multipath (ECMP). This ensures the frame would traverse the actual ECMP path a frame would take. It is not necessary for the Eping response message to be encoded like a data frame.

An alternative way of discovering the egress PE (PE5) is to send an EPing discover request message to a special multicast address (subscribed by all egress PEs), with CE2 address in the EPing discover request message. The egress PE, which has no next bridge hop or the next bridge hop has the MAC address of CE2, will send an EPing discover response message back to PE1, with the message containing the address of PE5. PE1 sends a EPing request message to PE5 as before to test the path for the data frame.

No hardware or Network Processor changes in bridges are required in the above mechanisms. Each bridge only need to be loaded with new application software which handles the EtherType Ping.

The Eping message is forwarded like a data frame, hence the Eping verifies and traces the path and the functional elements forwarding data frames. This is an important difference from being able to test only the path data frames should traverse and not testing the actual frame forwarding functional elements.

In summary this embodiment of the invention provides a mechanism for verifying a data path in an Ethernet bridged LAN. In one aspect the destination provider edge node is capable of diverting frames addressed to the destination customer edge node to the control plane based on their EtherType without terminating the frames. Therefore the Eping command can be i ssued without information on the destination provider edge node. In a second aspect the destination provider edge node does not have this diversion capability. Therefore the encapsulated Eping message must be addressed to the destination provider edge node so that it can be terminated before being sent to the control plane. The destination provider edge node can be discovered by either using a hop -by-hop approach wherein the address of the customer edge node is carried by a discover request message, or by sending a discover request message to a special multicast address and the provider edge node adjacent to the destination customer edge node responds to the discover request message.

The present invention also relates to a method of conducting a route trac e in a bridged Ethernet LAN. According to this embodiment an operator would initiate an Ethernet traceroute from a Provider Edge (PE) device to a destination device. In the following description the Ethernet traceroute function is known by the abbreviation: Etraceroute. The Etraceroute would return the MAC address (and Bridge Identification) of every Bridge on the path to the destination device and the round-trip delay at every Bridge hop on the way to the destination device.

For example an operator cou ld enter the following command:
ETraceroute DA <SA>

Where SA is the MAC Source Address and DA is the MAC Destination Address. If SA is not specified, the source address is set to the MAC Source Address of the device where the ETraceroute is invoked.

Figure 2 is a high level block diagram of a bridge Ethernet LAN for which the Ethernet route trace method is performed. The bridged Ethernet LAN of Figure 2 includes two customer equipment nodes (CE1 and CE2) communicatively connected by Ethernet bridges PE2 , P2, P3, and PE4 of a provider's network. The bridges PE1 and PE4 are at the edges of the provider's network, where bridge PE1 provides network access to CE1 and bridge PE4 provides network access to CE2. This connectivity may be also shown as follows.
CE1 ----- PE1 ----- P2 ----- P3 ----- PE4 -----CE2

In this example, it is assumed that a provider wants to trace the path of a data frame from CE1 to CE2 of a VLAN with tag value 1000. The operator would initiate an Etraceroute from a Provider Edge (PE) device to a MAC address e.g. a Customer Edge (CE) device as follows:
ETraceroute CE2_DA CE1_SA

The Etraceroute should return the MAC address (and Bridge Identification) of every Bridge on the path to the destination and the round -trip delay at every Bridge hop on the way to the destination.

In general, the Etraceroute message must be sent from a PE (PE1) that is the Source (PE1) or the next hop of the Source (CE1). At a PE (PE1), an Etraceroute Query message for a destination MAC address (e.g. CE2) is created to be sent to the next bridge hop (P2) by looking up the MAC forwarding table to the destination. The Etraceroute message contains the following fields:
- the DA, i.e. CE2_DA
- the timestamp when the message is sent out from PE1

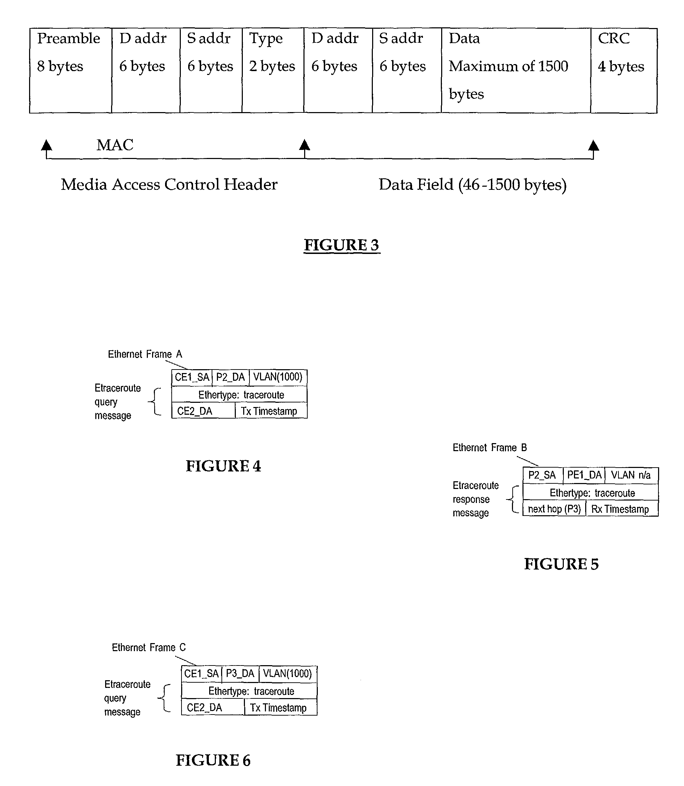

Figure 3 shows an Ethernet frame containing the media access control header and the data field. In the following description and in particular with reference to Figures 4, 5 and 6 the Ethernet frame format has been modified to show only relevant portions as they apply to the presen t application. Basically the traceroute message is a payload and the normal Ethernet header is prepended to the traceroute message.

The Etraceroute message is encapsulated in an Ethernet frame (A) with the SA set to CE1_SA and the DA is set to the MAC Ad dress of P2. The EtherType is set to VLAN and the VLAN tag value is set to 1000. The sub EtherType (EtherType of the frame belonging to VLAN 1000) is set to EtherType_Traceroute. The Ethernet frame (A) is then sent to the next hop bridge P2. Figure 4 show s Ethernet frame A.

When P2 receives the Etraceroute message, it terminates the frame and sends the frame to the control plane (or higher layer entity) handling the EtherType_Traceroute.

The control plane Traceroute entity records the time that the query was received. It then looks up the next Bridge hop to CE2_DA (this address is in the Etraceroute query message) and creates a Etraceroute response message to PE1 with the following fields:
- the timestamp when the message is received
- the next Bridge ho p to CE2_DA, i.e. P3.

Then P2 encapsulates the Etraceroute response message in an Ethernet frame (B) with the SA set to P2, the DA set to the MAC address of PE1, and the EtherType set to EtherType_Traceroute, and sends the Ethernet frame (B) to PE1. Note here it is not necessary for the Etraceroute response message to be encoded like the data frame (i.e. the VLAN tag is not required). Ethernet frame B is shown in Figure 5.

When PE1 receives the Etraceroute response message, it terminates the message (since it is destined to it) and sends the message to the control plane handling the EtherType_Traceroute. At PE1, another Etraceroute Query message is created for sending the next bridge hop P3 (obtained in the Etraceroute Response message from P2). The Etrac eroute Query message contains the following fields:
- the DA, i.e. CE2_DA
- the timestamp when the message is sent out from PE1

The Etraceroute Query message is encapsulated in an Ethernet frame (C) with the SA set to CE1_SA and the DA set to the MAC Address of P3, the EtherType is set to VLAN and the VLAN tag value is set to 1000. The sub EtherType (EtherType of the frame belonging to VLAN 1000) is set to EtherType_Traceroute. The Ethernet frame (C) is then sent to the next bridge hop P3. Ethernet frame C is shown in Figure 6.

When P3 receives the Etraceroute Query message, it terminates the frame and processes the EtherType_Traceroute frame and the whole procedure is repeated as shown above for each Bridge hop towards CE2, until a Etraceroute Response message is received from PE4. The Etraceroute Response message from PE4 contains the following:
- the timestamp when the message is received
- the next Bridge hop to CE2_DA, i.e. NULL.

When PE1 receives a NULL next bridge hop, the EtherType_Traceroute entit y displays all the collected information as shown below.

ETraceroute displays all the Bridges as follows:

ETraceroute from PE1 to PE4 for test packet from CE1 to CE2:
PE1 to P2 : rtt - 10ms
PE1 to P3 : rtt - 15 ms
PE1 to P4 : rtt - 30 ms
PE1 to PE5: rtt - 40 ms

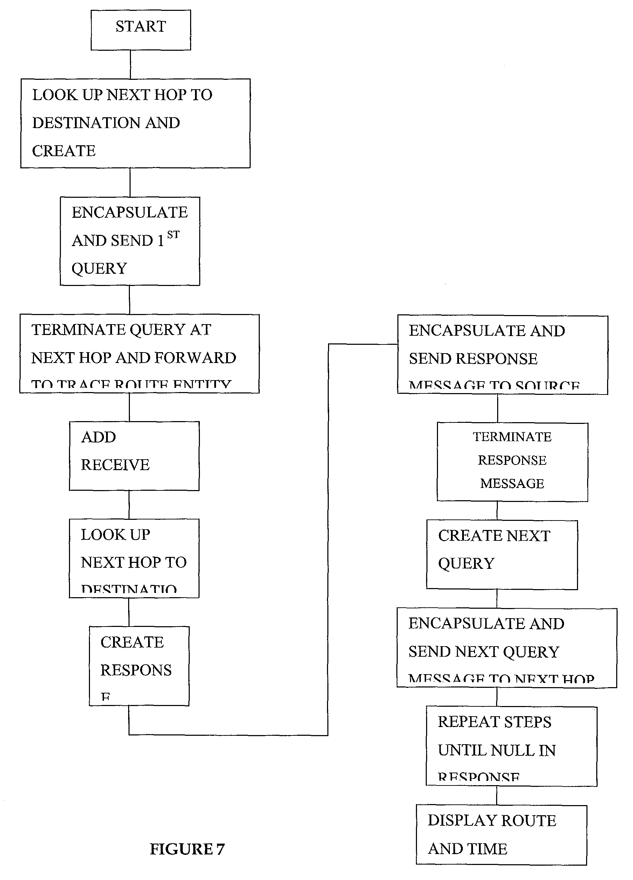

Figure 7 is a flow diagram showing process steps according to the invention.

A key aspect of this embodiment of the present invention is that the consecutive Etraceroute query messages are sent to the next hop and the subsequent next hop in the same path as a data frame. All bridges ideally should be configured to not discard or punt unknown/new EtherType such as EtherType_Traceroute to the control plane, to prevent intermediate bridges from intercepting EtherType_Traceroute messages.

In this solution, no hardware or Network Processor changes in bridges are required. Each bridge only need to be loaded with new application software which handles the EtherType Traceroute.

In a further aspect of the invention, if one of the bridges in the path doe s not have the route trace functionality the following steps are used to skip over that bridge and continue the trace. The traceroute software at ingress (source node CE1 or immediate next hop node PE1) would time out when it doesn't receive a response from a downstream bridge, and report the trace learned so far (i.e. it can't trace all the way to the destination MAC address).

The ingress bridge may issue another traceroute with the option to multicast to downstream bridges. This traceroute multicasts (a multicast address is reserved for this purpose) a query message to all downstream bridges (on the port towards the destination MAC address) and hence should be used sparingly. Etraceroute enabled bridges are members of this reserved multicast address. An intermediate bridge would receive and process the multicast query message as well as forward the multicast message. If a bridge does not understand the query message it will ignore it (but the query message is forwarded to the other downstream bridges of the spanning tree). All downstream bridges with a forwarding address of the target destination MAC address should respond with the next hop bridge MAC address.

For e.g.
CE1 ----- PE1 ----- P2 ----- P3 ----- P4 ---- P5 ---- PE6 --- CE2

If P2 and P3 are not Etracerou te enabled, P4, P5 and PE6 will respond with the appropriate next hops in response to the multicast traceroute query message from PE1.

PE1 concludes this is the set of consecutive downstream bridges that it can trace towards the destination CE2, starting from P4, since each response message has a next hop which matches the MAC source address of another response message, with the exception of the egress bridge PE6, with a next hop of the destination node. PE1 then displays the bridges that it can trace, sta rting from P4
PE1 to unknown hop(s)
PE1 to P4 (first Etraceroute aware bridge) : rtt - 30 ms
PE1 to P5: rtt - 40 ms
PE1 to PE6 : rtt - 60 ms

If P2 , P3 and P5 are not Etraceroute enabled, P4 and PE6 respond with the appropriate next hops in response to t he multicast traceroute query message from PE1.

PE1 concludes that there is a number of downstream bridges that it can trace towards the destination CE2. PE1 then displays the bridges that it can trace, starting from P4, and any other intermediate bridges that respond to the traceroute query message.
PE1 to unknown hop(s)
PE1 to P4 (first Etraceroute aware bridge) : rtt - 30 ms
PE1 to unknown hop(s)
PE1 to PE6 : rtt - 60 ms

To improve the accuracy of the traceroute, the PE1 may send (unicast) a tracerout e query message to all Etraceroute bridges as described before, instead of displaying the bridge hops directly after receiving traceroute response message. The extra step ensures the traceroute message traverse the paths as a normal data packet would. The ingress would not send a traceroute query message to downstream bridges that have not responded to the multicast query message. These bridges would be skipped in the traceroute query and the traceroute software at ingress would report no responses from th ese bridges.

In the present invention the traceroute message is forwarded like a data frame, hence the traceroute correctly and accurately verifies the path and functional elements that are forwarding data frames.

Further, no hardware or Network Processo r changes in bridges are required. Bridges are loaded with new application software that handles the EtherType Traceroute. The solution works even if some bridges in the route being traced do not have the trace route software installed.

In the unlikely event that data path changes occur during the route tracing procedure, the procedure could be run again, or several more times, in such cases. In fact, multiple tracing for the same route could be a standard option to further increase confidence in its resul ts.

Although specific embodiments of the invention have been described and illustrated it will be apparent to one skilled in the art that numerous changes can be made thereto without departing from the basic concept. It is to be understood, however, that such changes will fall within the full scope of the invention as defined by the appended claims.

## Claims

1. A method of verifying a data path from a source node to a destination node in a bridged Ethernet network, the data path including a source edge node connected to the source node and a destination edge node connected to the destination node, comprising the steps of:
a)creating, at the source edge node, a path verification request message;
b) encapsulating, by the source edge node, the request mess age in a first Ethernet frame including a path verification request indication;
c) sending the first Ethernet frame towards the destination node along the data path;
d) detecting, at the destination edge node, the first Ethernet frame;
e) creating, at the destination edge node, a path verification response message;
f) encapsulating, by the destination edge node, the response message in a second Ethernet frame including a path verification response indication;
g) sending the second Ethernet frame towards th e source node along the data path;
h) detecting, at the source edge node, the second Ethernet frame; and
i)determining, by the source edge node responsive to receiving the response message, that the data path is operational.

2. The method as defined in c laim 1 wherein steps d) and h) include the step of filtering the frames from data traffic on the data path according to request and response indications respectively.

3. The method as defined in claim 1 wherein steps b) and f) include the step of addressing the frames to the destination/source edge nodes and steps d) and h) include the step of terminating the frames.

4. The method as defined in claim 3 wherein prior to step a) the destination edge node is discovered.

5. The method as defined in claim 4 wherein the destination edge node is discovered by using a hop -by-hop technique wherein the address of the destination node is carried by a discover request message.

6. The method as defined in claim 4 wherein destination edge node is discovered by sendin g a discover request message to a special multicast address, and the destination edge node adjacent to the destination node responds to the discover request message.

7. The method as defined in claim 1 further include the step of calculating a round trip delay by adding a time stamp to the verification message and calculating, by the source edge node the delay responsive to receiving the response message.

8. A system for verifying a data path from a source node to a destination node in a bridged Ethernet network, the data path including a source edge node connected to the source node and a destination edge node connected to the destination node, comprising:
means, at the source edge node, for creating a path verification request message;
means, at the source edge node, for encapsulating the request message in a first Ethernet frame including a path verification request indication;
means for sending the first Ethernet frame towards the destination node along the data path;
means, at the destination edge nod e, for detecting the first Ethernet frame;
means, at the destination edge node, for creating a path verification response message;
means at the destination edge node for encapsulating the response message in a second Ethernet frame including a path verific ation response indication;
means for sending the second Ethernet frame towards the source node along the data path;
means, at the source edge node, for detecting the second Ethernet frame; and
means, at the source edge node responsive to receiving the res ponse message, for determining that the data path is operational.

9. A method of tracing a data path route from a source node to a destination node through multiple intermediate nodes in a bridged Ethernet system comprising:
sending a succession of Ethern et encapsulated route query messages from the source node, each message containing a media access control (MAC) address of the destination node;
receiving, at route trace enabled bridges in the system, the encapsulated route query messages;
determining at a control plane of the route trace enabled bridges a MAC address of a next hop bridge on route to the destination node;
returning the MAC address of the next hop bridge to source node in a response message;
repeating the sequence through remaining interme diate bridges until a response message indicating that the destination node has been identified; and
tabulating information in the response messages.

10. The method as defined in claim 9 wherein when the encapsulated route query messages are received at a non-enabled route trace bridge steps are taken to skip to a route trace enabled bridge.

11. The method as defined in claim 10 wherein the service node sends a multi cast message to nodes downstream of the non -enabled bridge to locate a route trace enable bridge in the route to the destination node.

12. The method as defined in claim 11 wherein the encapsulated route query message is sent to the bridge next to the non -enabled bridge which responds to the multi cast message.

13. The method as defined in claim 9 wherein the query message includes address information of the source and destination nodes at connection type.

14. The method as defined in claim 9 wherein the query message also includes a time stamp value entered by the control plane at respecti ve route trace enabled bridges.

15. The method as defined in claim 9 wherein the response message includes address information of the source nodes and destination node.

16. The method as defined in claim 9 wherein the step of tabulating information generates a report defining bridges traversed by the Ethernet frame.

17. The method as defined in claim 14 wherein time stamp information respecting each bridge traversed included in the report.

18. A system for tracing a data path route from a source node to a destination node through multiple intermediate nodes in a bridged Ethernet system comprising:
means for sending a succession of Ethernet encapsulated route query messages from the source node, each message containing a media access control (MAC) address of the destination node;
a control plane at route trace enabled bridges in the system to receive the encapsulated route query messages;
means at a control plane of the route trace enabled bridges for determining a MAC address of a next hop bridge on route to the destination node;
returning the MAC address of the next hop bridge to source node in a response message;
means for repeating the sequence through remaining intermediate bridges until a response message indicating that the destination node has been identified; and means for tabulating information in the response messages.
